# EUROPÄISCHE PATENTANMELDUNG

(11) **EP 2 431 668 A2**
(43) Veröffentlichungstag der Anmeldung: **21.03.2012**
(21) Anmeldenummer: 11450107.5
(22) Anmeldetag: 26.08.2011
(51) Int. Cl.: F24D 3/18, F24D 19/00, F24D 19/10

(54) **Frostschutzeinrichtung**

(30) Priorität: 16.09.2010 AT 15462010
(71) Anmelder: Cleen Solar GmbH, 7011 Siegendorf (AT)
(72) Erfinder: Stricker, Erwin, 7062 St. Margarethen (AT)
(74) Vertreter: Sonn & Partner Patentanwälte

(57) **Zusammenfassung**

Frostschutzeinrichtung (10) für eine von einem Gebäude-Innenbereich (8) in einen Außenbereich (9) geführte, eine gegen Einfrieren zu schützende Flüssigkeit enthaltende Pumpleitung (3'), wobei die Flüssigkeit bei Frostgefahr in der Leitung (3) zirkuliert wird; hierfür sind ein elektrisch betätigtes, im stromlosen Zustand offenes, zum Anschluss an die Pumpleitung (3') eingerichtetes Ablassventil (17) und eine stromlos arbeitende, Flüssigkeit unter Druck nachfüllende, automatische, zum Anschluss an die Pumpleitung (3') eingerichtete Fülleinrichtung (14) vorgesehen, wobei bei Stromausfall im Betrieb Flüssigkeit aus der Leitung (3) über das dann offene Ablassventil (17) austritt und Flüssigkeit automatisch über die Fülleinrichtung (14) nachgefüllt wird, wodurch Flüssigkeit in der Leitung (3) zirkuliert wird.

## Beschreibung

Die Erfindung betrifft eine Frostschutzeinrichtung für eine von einem Gebäude-Innenbereich in einen Außenbereich geführte, eine gegen Einfrieren zu schützende Flüssigkeit enthaltende Pumpleitung, wobei die Flüssigkeit bei Frostgefahr in der Leitung zirkuliert wird.

Derartige Frostschutzeinrichtungen sind insbesondere dann erwünscht, wenn eine Pumpleitung, z.B. eine isolierte oder nichtisolierte Freileitung, von einem Gebäude nach außerhalb, zu einem im Außenbereich angebrachten Außengerät, wie etwa einer Wärmepumpe, aber auch einer anderen Einrichtung, geführt sind; möglich ist es hierbei auch, über die Pumpleitung ein Gerät in einem Nebengebäude zu versorgen. Nachfolgend wird der Einfachheit halber beispielhaft auf die Verwendung der Frostschutzeinrichtung in Verbindung mit Wärmepumpen, insbesondere Monoblock-Luft-Wasser-Wärmepumpen, eingegangen, ohne dass jedoch andere Anwendungen ausgeschlossen werden sollen.

Wärmepumpen werden in verschiedenen Bauformen angeboten, wobei beispielsweise aufgrund der Energieherkunft bzw. der Energieabgabe zwischen folgenden Systemen unterschieden werden kann:
- Wasser - Wasser (Brunnen)
- Luft - Wasser
- Luft - Luft
- Sole - Wasser
- Direktverdampfer.

Im Fall von Luft-Wasser-Wärmepumpen wird bekanntlich Energie aus der Außenluft mittels eines Verdampfers aufgenommen und über einen Wärmetauscher (Kondensator) abgegeben; hierbei gibt es beispielsweise folgende Bauformen:
- Monoblock für Außenaufstellung
- aufgeteilte Ausführung (Split-Ausführung)
- Monoblock für Innenaufstellung.

Die Anwendung dieser Bauformen richtet sich danach, in welchen - unterschiedlichen - Klimazonen diese Wärmepumpen eingesetzt werden. Bei der erstgenannten Bauart, der Monoblock-Luft-Wasser-Wärmepumpe für Außenaufstellung, befindet sich der komplette Wärmeerzeuger einschließlich Wasserinstallationsteil (Heizungswasser) im Außenbereich. Auch die für die Zirkulation des Heizungswassers, allgemein eine in einer Pumpleitung geführte Flüssigkeit, verantwortliche Pumpe befindet sich im Außenbereich. Diese Bauart wird daher in der Regel in geographischen Gebieten verwendet, wo Temperaturen unter dem Gefrierpunkt im Normalfall nicht auftreten. Im Fall der Anbringung in Gebieten mit Temperaturen unter dem Gefrierpunkt müssen spezielle Maßnahmen vorgesehen werden, um ein Einfrieren des Wassers bzw. der Flüssigkeit zu verhindern. Energetisch gesehen ist diese Bauart jedoch die effizienteste Art hinsichtlich der Überführung von Energie aus der Luft in einen Wasserkreis, da auf lange Kältemittelwege und die damit verbundenen großen Kältemittelmengen, wie etwa bei der Splitbauweise, verzichtet werden kann; ebenso erübrigen sich aufwendig zu isolierende und Schwitzwasser bildende Luftkanäle, wie sie in der Monoblock-Innenausführung gegeben sind.

Die Split-Luft-Wasser-Wärmepumpe ist insofern mit der vorgenannte Monoblock-Wärmepumpe für Außenaufstellung vergleichbar, als zumindest der Verdampfer mit seinem Ventilator im Außenbereich aufgestellt wird; in vielen Fällen wird auch der Kompressor im Freien angeordnet. Von dieser Außeneinheit führt eine lange, auf der Baustelle von einem Kältetechniker zu befüllende Kältemittelleitung zu einem im Innenbereich installierten Kondensator, der den Übergang zum Wasserbereich bildet. Von Vorteil ist bei dieser Bauart, dass ein Einfrieren vermieden wird, da sich keine Wasserinstallation im Außenbereich befindet; von Nachteil ist jedoch, dass die Installation bzw. Montage im Hinblick auf die Verwendung des Kältemittels und des Befüllens der Leitung mit diesem Kältemittel aufwendig und teuer ist. Weiters ist auch der Abtauvorgang aufgrund der längeren Leitungen zeit- und dadurch energieaufwendig. Im Innenbereich, d.h. im jeweiligen Gebäudeinneren, benötigen diese Geräte relativ viel Platz, da Teile der Anlage, wie insbesondere der Kondensator, installiert werden müssen. Auch verursachen diese Geräte mehr Lärm im Innenraum, verglichen mit Wärmepumpen für Außenaufstellung.

Die Monoblock-Luft-Wasser-Wärmepumpen für Innenaufstellung sind von der Grundkonstruktion ähnlich den Geräten für eine Außenaufstellung, von großem Nachteil sind jedoch der Platzbedarf im Innenraum, eine aufwendige Luftkanalführung, und die Kondensatbildung während des Abtauvorgangs im Gebäude. Vor allem ist hier auch die Lärmentwicklung im Innenbereich groß. Was den Platzbedarf anlangt, so werden für derartige Wärmepumpen in den Heizräumen mindestens 12 m² benötigt.

Zusammenfassend ergibt sich somit, dass Monoblock-Luft-Wasser-Wärmepumpen für Außenaufstellung zu bevorzugen wären, gäbe es nicht das Problem der Frostgefahr für den im Außenbereich geführten Wasserkreislauf. Bei einer Außenaufstellung in Klimazonen mit Temperaturen unter dem Gefrierpunkt sind daher wie erwähnt besondere Maßnahmen vorzusehen, um ein Einfrieren zu verhindern.

So wurde in der Praxis bereits vorgeschlagen, einen gesonderten Wärmetauscher, wie etwa einen Plattenwärmetauscher mit eigener Expansionstechnik, im Innenbereich an einem frostfreien Platz anzubringen und in einem Trennkreis zu verbauen. Die Primärseite, zwischen Kondensator und Wärmetauscher, kann dann mit einer Flüssigkeit mit Frostschutzmittel gefüllt werden, um ein Einfrieren zu verhindern. Die Sekundärseite ist die Heizungswasserseite. Nachteilig ist bei dieser Ausbildung der reduzierte Wirkungsgrad der Wärmepumpe, da die Wärmepumpe ein höheres Temperaturniveau erzeugen muss, um den vom Trenn- oder Zwischenkreis verursachten Temperaturniveauverlust auszugleichen; weiters ergibt sich eine schlechtere Wärmeübertragung durch den Einsatz von Frostschutzmittel sowie überdies ein Effizienzverlust durch die Notwendigkeit einer zweiten Umwälzpumpe. Nachteilig sind auch der höhere hydraulische und elektrische Installationsaufwand, mit den entsprechenden höheren Materialkosten, sowie der höhere Wartungsaufwand im Hinblick auf die Kontrolle des Zwischenkreises, der Expansionseinrichtung, von Filtern, etc..

Ein anderer Vorschlag geht dahin, dass mit einem Sensor festgestellt wird, wenn der Wasserkreis steht, und dass dann bei einem Unterschreiten einer vorgegebenen Außentemperatur ein Entleerungsventil geöffnet wird, welches den Außenkreis entleert. Sofern hierbei im Hinblick auf einen etwaigen Stromausfall, der dieses System nicht funktionsfähig gestalten würde, keine elektrisch betätigten Einrichtungen eingesetzt werden, muss bei dieser Lösung darauf geachtet werden, dass die zu schützenden Außenkomponenten (Wärmepumpe) sowie Rohrleitungen bis zum Entleerungsventil selbstentleerend, d.h. mit Gefälle, verlegt sind. Wenn die Entleerung im Außenbereich erfolgt, kommt es weiters zu einer nachteiligen Eisbildung, und eine Eisbildung ergibt sich auch bei einem neuerlichen Füllvorgang, da das Frischwasser erst das Entleerungsventil erwärmen muss und noch eine Zeit lang Wasser in das Freie austreten kann. Im Fall einer automatischen Wiederbefüllung des Systems ist überdies nicht sichergestellt, dass der entleerte Teil des Systems wieder luftfrei gefüllt wird, da sich das Entleerungsventil in verschiedenen Abständen von den verschlossenen Enden der Rohrleitungen befindet und während der Befüllung die Pumpe wieder anläuft. Dadurch wird Luft unweigerlich in das System eingebracht. Auch kann es unter diesen Aspekten zu einer Korrosion der Komponenten und Leitungen kommen. Diese Systeme mit automatischer Entleerung sind überdies komplex, fehleranfällig, benötigen viele Komponenten sowie in der Regel eine elektronische Steuerung. Beispiele für derartige Anlagen mit Entleerungssystem sind die in der EP 2 149 758 A1 beschriebene Wärmepumpenanordnung sowie auch jene, die in einem Prospekt Caleffi aus 2010 geoffenbart ist, vgl. hierzu auch das Frostschutz-Entleerungsventil gemäß EP 2 182 261 A1.

Weiters wurde auch bereits vorgeschlagen (vgl. WO 2005/057094 A2 und DE 103 13 097 A1), eine Pumpe zur Zirkulation des Wassers bzw. der gegen Einfrieren zur schützenden Flüssigkeit vorzusehen, die insbesondere bei nicht im Betrieb befindlicher Wärmepumpe in Funktion tritt und die Flüssigkeit durch das System zirkuliert, um so ein Einfrieren zu verhindern. Von gravierendem Nachteil ist hier, wie auch teilweise bei den vorhergehend beschriebenen Systemen, oder aber bei Lösungsansätzen mit elektrischen Notheizungen etc., dass diese Systeme bei einem Stromausfall nicht mehr funktionieren.

In ähnlicher Weise sind auch die Einrichtungen gemäß EP 2 149 758 A1, DE 28 37 565 A1, DE 102009017403 A1 und DE 30 21 422 A1 abhängig vom Einsatz eines elektrischen Stroms zur Betätigung von Ventilen etc., um bei Frostgefahr das jeweilige Leitungssystem zu entleeren.

Es ist nun Aufgabe der Erfindung, eine Frostschutzeinrichtung wie vorstehend angeführt vorzusehen, mit der auch bei einem Stromausfall zuverlässig ein Schutz gegen ein Einfrieren und damit gegen eine Schädigung der jeweiligen Leitungen (Rohrleitungen) und Komponenten erzielt wird; dieser Schutz soll dabei ohne Wirkungsgradverluste, ohne zusätzlichen Wärmeaustausch und ohne zusätzlichen Wärmetransport möglich sein; weiters ist es auch wünschenswert, den jeweiligen Kreislauf nach erfolgtem Frostschutz wieder auf Betriebsdruck zu füllen, ohne dass Luft in den Kreislauf gelangen kann, d.h. es soll eine Gesamtsystembefüllung ermöglicht werden, ohne dass hierfür besondere Zusatzkomponenten verwendet werden müssen.

Zur Lösung dieser Aufgabe sieht die Erfindung eine Frostschutzeinrichtung wie in Anspruch 1 definiert vor. Vorteilhafte Ausführungsformen und Weiterbildungen sind in den abhängigen Ansprüchen angegeben.

Mit der vorliegenden Frostschutzeinrichtung kann eine von einem Gebäude-Innenbereich in einen Außenbereich geführte Pumpleitung, die eine gegen Einfrieren zu schützende Flüssigkeit, in der Regel Wasser, führt, auf außerordentlich einfache, dabei nichtsdestoweniger äußerst wirksame Weise gegen ein Einfrieren geschützt werden, wobei eine Einrichtung eingerichtet ist, um die Flüssigkeit bei Frostgefahr in der Leitung im Außenbereich zu zirkulieren, wenn ein Stromausfall auftritt. Zu diesem Zweck ist einerseits ein elektrisch betätigtes, im stromlosen Zustand jedoch offenes Ablassventil vorgesehen, das zum Anschluss an die Pumpleitung eingerichtet ist; andererseits ist eine automatische, stromlos arbeitende Fülleinrichtung für die Flüssigkeit, insbesondere Wasser, vorgesehen, die eingerichtet ist, die Flüssigkeit bzw. das Wasser unter Druck in die Pumpleitung nachzufüllen, und die ebenfalls zum Anschluss an die Pumpleitung eingerichtet ist; bei einem Stromausfall im Betrieb tritt Flüssigkeit bzw. Wasser aus der Leitung über das dann offene Ablassventil aus, und dementsprechend wird automatisch über die Fülleinrichtung, die bestrebt ist, den Betriebsdruck aufrechtzuerhalten, Flüssigkeit bzw. Wasser nachgefüllt, so dass sich eine Zirkulation der Flüssigkeit in der Leitung im Außenbereich ergibt. Dies bedeutet weiters, dass die Pumpleitung dauernd gefüllt gehalten wird, so dass bei Stromrückkehr der Betrieb der Anlage in der normalen Form fortgesetzt wird, ohne dass ein neuerliches Befüllen der Anlage erforderlich wäre.

Die Pumpleitung wird in der Regel eine die Flüssigkeit vom Innenbereich in den Außenbereich führende Zuleitung (vorzugsweise zu einer Wärmepumpe) sowie eine die Flüssigkeit aus dem Außenbereich in den Innenbereich (zu einem Abnahmesystem oder Verbraucher) zurückführende Rückleitung aufweisen; dabei ist bevorzugt vorgesehen, dass die automatische Fülleinrichtung zum Anschluss an die Zuleitung vorgesehen ist, wogegen dass Ablassventil zum Anschluss an die Rückleitung vorgesehen ist.

Es sei hier erwähnt, dass elektrisch betätigte, im stromlosen Zustand offene Ventile bzw. Absperrorgane ebenso wie automatische Fülleinrichtungen (Nachfülleinrichtungen) an sich im Stand der Technik bekannt sind, vgl. beispielsweise Wasser-Nachfüllkombinationen für Zentralheizungsanlagen und dergleichen Systeme; eine mögliche Nachfüllkombination ist beispielsweise unter der Bezeichnung "Honeywell NK300" auf dem Markt erhältlich und erfüllt die Anforderungen nach DIN EN 1717 sowie DIN EN 12828:2003.

Um sicherzustellen, dass beim automatischen Nachfüllen mit Hilfe der angegebenen Fülleinrichtung die Flüssigkeit bzw. das Wasser in der gewünschten Richtung fließt, wird zweckmäßigerweise ein Rückschlagventil vorgesehen, das in der Pumpleitung angebracht wird und darin ein Fließen in nur eine Richtung, nämlich in den Außenbereich hin, ermöglicht. Alternativ dazu wäre es auch denkbar, ein Strömen der nachgefüllten Flüssigkeit (Wasser) zum Innenbereich durch irgend eine andere Einrichtung zu unterbinden, welche sicherstellt, dass zumindest im Falle des Stromausfalls die Fließrichtung wie gewünscht über den Außenkreis führt, beispielsweise derart, dass im Innenbereich, vorzugsweise zwischen der Nachfülleinrichtung und Abgabesystem, ein im stromlosen Zustand geschlossenes Absperrorgan mit elektrischer Betätigung (das im Normalfall elektrisch offen gehalten wird) angeordnet wird. Dadurch kann ebenfalls eine Zirkulation im Außenkreis, zum Ablassventil hin, sichergestellt werden. Die Lösung mit dem Rückschlagventil wird jedoch wegen der Einfachheit und Effizienz bevorzugt.

Um etwaige Schmutzpartikel oder dergleichen aus der Flüssigkeit, insbesondere Wasser, beim Füllen zu entfernen, ist bevorzugt ein Filter der Fülleinrichtung nachgeschaltet.

Die automatische Fülleinrichtung wird, wenn es sich um eine Wasser-Fülleinrichtung handelt, bevorzugt einfach an eine Wasserversorgung, insbesondere an einen Trinkwasseranschluss, angeschlossen. Im Fall, dass eine andere Flüssigkeit, wie etwa Wasser mit Zusatzstoffen, verwendet wird, wird die Fülleinrichtung an ein entsprechendes Aufbereitungsgefäß angeschlossen, wo die Flüssigkeit unter einem ähnlichen Druck wie im Fall eines Wasserleitungsanschlusses gehalten ist (maximal 10 bar).

Bevorzugt weist das Ablassventil einen Elektromotor als elektrische Antriebsquelle auf; der Elektromotor kann dann die Ventilspindel über ein Getriebe antreiben, wie dies an sich bekannt ist, und im Fall eines Stromausfalls gibt der Motor bzw. das Getriebe das Ventilorgan frei, welches durch eine Feder in eine Offenstellung gedrückt wird. Im Fall einer elektrischen Stromversorgung wirkt dagegen der Elektromotor mit dem Getriebe gegen die Feder, um das Ablassventil in die geschlossene Stellung zu bringen. Das Ablassventil kann beispielsweise ein elektrisch betriebener Feder-Kugelhahn sein.

Um ein unnötigerweise zu starkes Ausfließen der Flüssigkeit aus dem System im Ernstfall zu verhindern und die Durchflussmenge auf einen Wert zu begrenzen, bei dem gerade ein Einfrieren der Flüssigkeit nicht auftritt, kann das Ablassventil als Drosselventil für eine gedrosselte Abgabe der Flüssigkeit im offenen Zustand ausgebildet sein; andererseits ist es auch möglich, in Reihe mit dem Ablassventil eine gesonderte Drossel anzuordnen, um so die durchfließende Flüssigkeit im gewünschten Ausmaß zu drosseln. Vorzugsweise ist das Ablassventil bzw. ist die Drossel hinsichtlich der Durchflussmenge einstellbar. Diese Einstellung kann einfach bei der Installation der Frostschutzeinrichtung für eine tiefste anzunehmende Temperatur, beispielsweise -25°C, eingestellt werden, jedenfalls hängt die einzustellende gedrosselte Durchflussmenge auch von der Größe des Systems bzw. der Länge der Leitungen und ähnlichen Parametern ab; die Einstellung der Durchflussmenge kann jedoch einfach durch Testen gefunden werden. Denkbar ist es auch, die Drosselung je nach Temperatur einzustellen, wozu der Drossel eine bei Stromausfall batteriebetriebene, mit einem Temperaturfühler verbundene Reglereinheit zur automatischen Einstellung der Durchflussmenge zugeordnet werden kann.

Bevorzugt ist die Pumpleitung zur Verbindung mit einem Außengerät, z.B. einer Wärmepumpe, bevorzugt einer Monoblock-Luft-Wasser-Wärmepumpe, eingerichtet, d.h. es wird die vorliegende Frostschutzeinrichtung bevorzugt in Verbindung mit derartigen Monoblock-Luft-Wasser-Wärmepumpen im Außenbereich eingesetzt. Selbstverständlich sind aber auch andere Anwendungen, wie bereits eingangs erwähnt, denkbar und möglich.

Eine hinsichtlich der Handhabung und Installation besonders vorteilhafte Ausführungsform zeichnet sich dadurch aus, dass zumindest das Ablassventil und die automatische Fülleinrichtung, gegebenenfalls auch der Filter und das Rückschlagventil, zu einer integralen Baueinheit zusammengefasst sind, die Verbindungsleitungen, z.B. mit Gewindeanschlüssen, zur Verbindung mit der Pumpleitung aufweist. Eine derartige Baueinheit ist für sich manipulierbar, sie kann kompakt ausgeführt werden, und sie ermöglicht eine besonders effektive, rasche Montage im Hinblick auf eine Ausrüstung einer bestehenden Anlage, beispielsweise Wärmepumpenanlage, mit der vorliegenden Frostschutzeinrichtung.

Die Erfindung wird nachfolgend beispielhaft anhand von besonders bevorzugten Ausführungsbeispielen, auf die sie jedoch nicht beschränkt sein soll, unter Bezugnahme auf die Zeichnung noch weiter erläutert. Im Einzelnen zeigen in der Zeichnung:
Fig. 1 ein Schema einer Wärmepumpenanlage in Verbindung mit beispielsweise einer im Innenbereich eines Gebäudes vorhandenen Fußbodenheizung oder dergl. Abgabesystem, unter Zwischenschaltung einer Frostschutzeinrichtung gemäß der Erfindung im Innenbereich; und
Fig. 2 in einem Schema den Aufbau einer derartigen Frostschutzeinrichtung gemäß der Erfindung im Detail, wobei auch mit strichpunktierten Linien die Zusammenfassung der wesentlichen Komponenten dieser Frostschutzeinrichtung zu einer Baueinheit angedeutet ist.

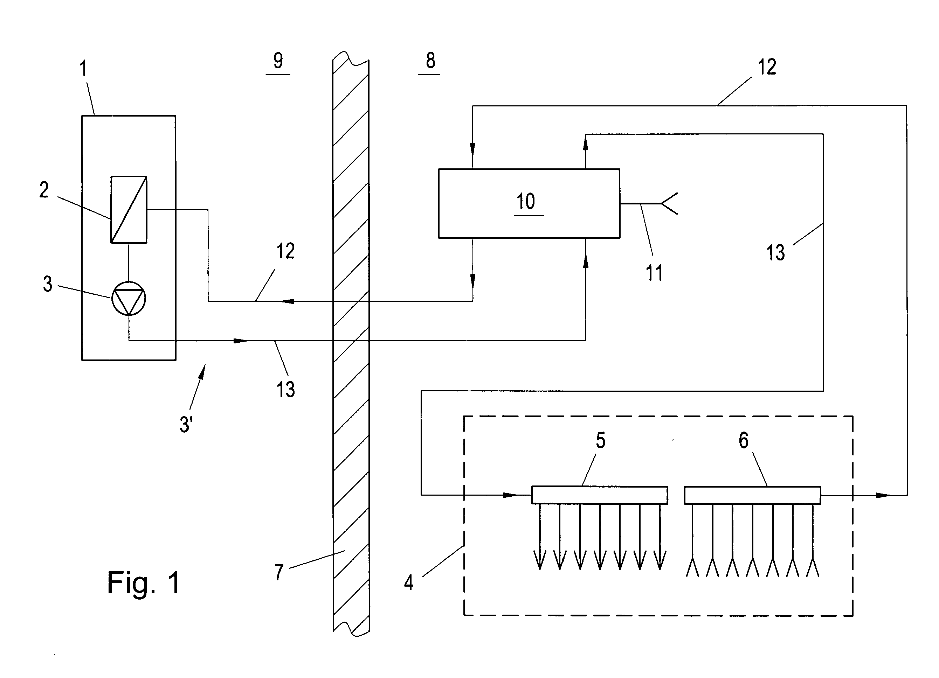

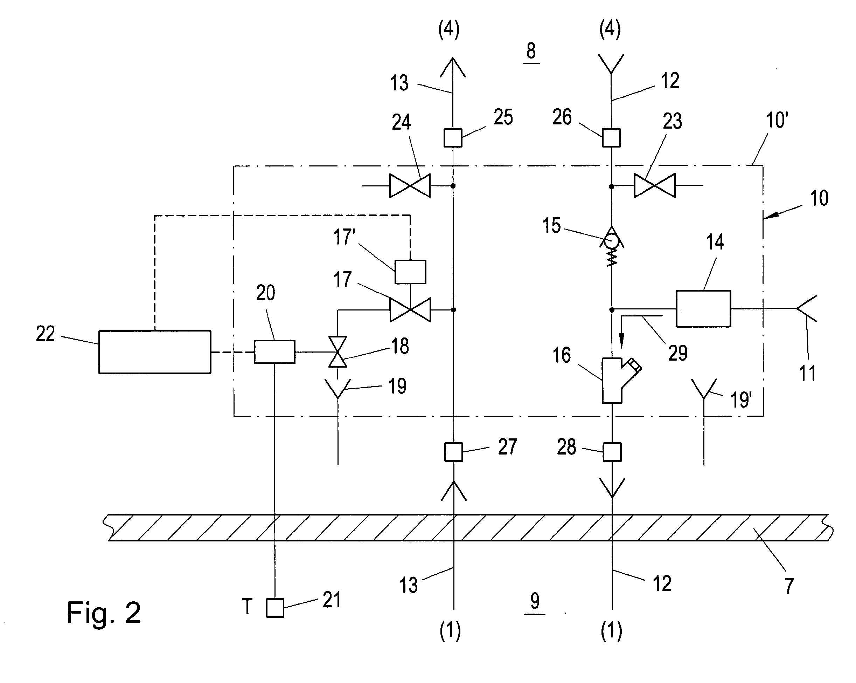

In Fig. 1 ist ein hinsichtlich Einfrieren zu schützendes Außengerät 1, beispielsweise eine Wärmepumpe, insbesondere eine Monoblock-Luft-Wasser-Wärmepumpe, gezeigt, das bzw. die einen nur ganz schematisch angedeuteten Wärmeerzeuger 2 sowie eine Umwälzpumpe 3 enthält, um eine gegen Einfrieren zu schützende Flüssigkeit, insbesondere Wasser, über eine Pumpleitung 3', nach Erwärmung, einem Abgabesystem 4, zum Beispiel einer Fussbodenheizung mit einem Vorlauf 5 und einem Rücklauf 6, zuzuführen, bzw. um von dort die Flüssigkeit, insbesondere Wasser, nach der Wärmeabgabe zurückzuerhalten. Mit einer Mauer 7 ist ein Gebäude angedeutet, wobei die Mauer 7 einen Gebäude-Innenbereich 8 von einem Außenbereich 9 - wo das Außengerät 1 aufgestellt ist - trennt. Im Innenbereich 8 ist weiters eine Frostschutzeinrichtung 10 mit einem Anschluss 11, z.B. an eine Wasserleitung oder an eine Flüssigkeit unter Druck haltenden Behälter (nicht gezeigt) anzuschließen. Diese Frostschutzeinrichtung 10 wird nachfolgend anhand der Fig. 2 noch näher erläutert werden.

Die Pumpleitung 3' bildet somit einen Kreislauf, wobei eine die Flüssigkeit, insbesondere Wasser, vom Innenbereich 8 in den Außenbereich 9 führende Zuleitung 12 sowie eine vom Außenbereich 9 in den Innenbereich 8 zurückführende Rückleitung 13 vorliegt. Diese Zuleitung 12 und Rückleitung 13 liegen konkret zwischen der Frostschutzeinrichtung 10 und dem Außengerät 1 vor, jedoch verlaufen diese Zuleitung 12 und Rohrleitung 13 zur Bildung eines geschlossenen Kreislaufs weiter zum Abgabesystem 4, vgl. die entsprechenden Leitungszweige zwischen Abgabesystem 4 und Frostschutzeinrichtung 10 im Innenbereich 8. Die Leitungen 12, 13 sind in der Regel Rohrleitungen, die im Außenbereich isoliert sein können (aber nicht müssen).

Aus Fig. 1 ergibt sich, dass die Pump- oder Zirkulationsleitung 3' im Innenbereich 8 aufgetrennt ist, um dort die Frostschutzeinrichtung 10 zwischenzuschalten.

Gemäß Fig. 2 weist die Frostschutzeinrichtung 10 eine an sich bekannte automatische, stromlos arbeitende Fülleinrichtung 14 auf, wobei es diese Fülleinrichtung 14 ist, die den Anschluss 11 zur Verbindung mit der Wasserleitung etc., aufweist. Diese automatische Fülleinrichtung 14 ist im gezeigten Beispiel, und wie dies bevorzugt ist, an die in den Außenbereich 9 führende Zuleitung 12 angeschlossen, wobei ein Rückschlagventil 15 in der Zuleitung 12 sicherstellt, dass im Fall des automatischen Nachfüllens die Fließrichtung in Richtung Außenbereich 9 verläuft. In Fließrichtung nach der Fülleinrichtung 14 ist weiters ein an sich herkömmlicher Filter oder Schmutzfänger 16 angeordnet, um etwaige Schmutzpartikel oder dergl. aus der Flüssigkeit herauszufiltern.

Andererseits ist an die Rückleitung 13, die vom Außenbereich 9 zum Innenbereich 8 zurückführt, ein Ablassventil 17 angeschlossen, das elektrisch betätigt ist, wie mit einer elektrischen Antriebseinheit 17' in Fig. 2 angedeutet ist, und das im stromlosen Zustand offen ist.

Im Einzelnen kann dieses Ablassventil 17 ein an sich herkömmlicher elektrisch betriebener Feder-Kugelhahn sein. Gegebenenfalls, und wie im Beispiel gemäß Fig. 2 dargestellt, kann dem Ablassventil 17 noch eine Drossel 18 nachgeschaltet sein, um die Durchflussmenge der im noch zu beschreibenden Ernstfall austretenden Flüssigkeit, die in einen Abfluss 19 gelangt, auf ein notwendiges Mindestmaß zu beschränken. Gegebenenfalls kann aber auch das Ablassventil 17 so ausgewählt oder eingestellt sein, dass nur eine beschränkte Menge Flüssigkeit pro Zeiteinheit in den Abfluss 19 gelangt, und zwar gerade so viel, dass - bei automatischer Nachfüllung mit Hilfe der Nachfülleinrichtung 14 - eine Zirkulation in der Pumpleitung 3' erhalten wird, bei der ein Einfrieren der Flüssigkeit in der Pumpleitung 3' ebenso wie im Außengerät 1 verhindert wird. Zum Verhindern des Einfrierens trägt dabei sowohl der Umstand bei, dass eine strömende Flüssigkeit gegeben ist, als auch selbstverständlich vor allem der Umstand, dass die nachgefüllte Flüssigkeit Wärme in den Kreislauf einbringt.

Im Außenbereich 9 kann die Temperatur beispielsweise zwischen -40°C und +50°C schwanken. Im Innenbereich 8 ist andererseits davon auszugehen, dass die Temperatur immer oberhalb von 5°C liegt. Im Fall des Nachfüllens von Wasser aus der Wasserleitung beträgt die Wassertemperatur z.B. 5°C bis 10°C.

Abhängig von der jeweiligen Außentemperatur sowie auch von der Länge der Pumpleitung 3' im Außenbereich 9, von der Größe des Außengeräts 1 und dergl. Parametern kann die erforderliche Mindestmenge an abzulassender Flüssigkeit variieren. Es ist nun einfach möglich, die Durchflussmenge derart zu drosseln, dass auch für den theoretischen "worst case" ein Frostschutz wie gewünscht erreicht wird. Um jedoch dann, wenn die Durchflussmenge im Vergleich zum "worst case" niedriger sein kann, entsprechend weniger Flüssigkeit bzw. Wasser dem Abfluss 19 zuzuführen, kann auch eine Reglereinheit 20 der Drossel 18 zugeordnet sein, um die Drosselöffnung abhängig von der mit Hilfe eines Temperatursensors 21 erfassten Außentemperatur T einzustellen. Die Reglereinheit 20 kann dabei ebenso wie das Ablassventil 17 für den Normalfall an eine übliche Stromversorgung, zum Beispiel das Stromnetz 22, angeschlossen sein. Bei einem Stromausfall schaltet die Reglereinheit 20 auf Batteriebetrieb um, um so je nach Außentemperatur T die Drosselöffnung von einem im stromlosen Zustand größten Ausmaß auf eine kleinere Öffnung drosseln (oder gegebenenfalls, bei positiven Außentemperaturen, überhaupt schließen) zu können.

Aus Fig. 2 ist noch zu ersehen, dass auch der Nachfülleinrichtung 14 ein Abfluss 19' zugeordnet ist. Weiters ist mit einer strichpunktierten Umrandung veranschaulicht, welche Komponenten in der beschriebenen Frostschutzeinrichtung 10 - als integrale Baueinheit 10' - inkludiert sein können. Dabei können auch noch Füll- und Entleerhähne 23, 24 vorgesehen sein, die bei einem erstmaligen Befüllen der Anlage zweckmäßig sind, wie nachstehend noch näher erläutert werden wird.

Im Einzelnen ist dabei der eine Füll- und Entleerhahn 23 der vom Abgabesystem 4 zum Außenbereich 9 führenden Zuleitung 12, also heizungstechnisch gesehen dem Rücklauf, zugeordnet, wogegen der andere Füll- und Entleerhahn 24 der Rückleitung 13, also dem Heizungs-Vorlauf, zugeordnet ist. Schließlich sind in Fig. 2 noch Leitungsverbindungen oder Anschlüsse 25, 26, 27 und 28, insbesondere Gewindeanschlüsse, schematisch angedeutet, über die die automatische Nachfülleinrichtung 10 in die Pumpleitung 3', also in die Zu- und Rückleitungen 12, 13, eingebunden werden kann.

Das Abgabe- oder Verbrauchersystem 4 kann ganz allgemein im Innenbereich 8 des Gebäudes ein Wärme- oder Kälteabgabesystem sein, welches dort über eine Fußbodenheizung, wie erwähnt, gegebenenfalls auch über Heizkörper, über eine Wandheizung oder über Fan-Coils usw., arbeitet. Die Frostschutzeinrichtung 10 ist wie ebenfalls erwähnt bevorzugt mit ihrem Anschluss 11 an das Wassernetz (Kaltwasser) angeschlossen, wobei hier gewünschtenfalls ein Absperrorgan angebracht werden kann, das nur unter ganz bestimmten Umständen, etwa für die Installation oder für den Abbau von Teilen der Anlage, bewußt absperrbar ist.

Was das elektrisch betätigte Ablassventil 17 betrifft, so ist hier außer dem erwähnten elektrisch betriebenen Kugelhahn jede andere Art von Absperrorgan, welches elektrisch betätigbar ist und im stromlosen Betrieb offen ist, in gleiche Weise einsetzbar.

Wie ersichtlich werden Teile der Pumpleitung 3', also jeweilige Rohrleitungen, einerseits im Innenbereich 8 geführt, und andererseits sind sie im Außenbereich 9 verlegt und dort frostgefährdet, vor allem wenn die Rohrleitungen nicht in Frostschutztiefe im Erdreich verlegt werden können, abgesehen davon dass das Außengerät 1 in der Regel im Freien angeordnet ist. Wenn daher die Leitungen 12, 13 auch isoliert sind, so ist doch eine Frostgefahr bei Minustemperaturen gegeben, und zwar dann, wenn die Stromversorgung ausfällt und damit die Wärmepumpe 1/3 zum Stillstand kommt.

Wenn sich die beschriebene Anlage (s. Fig. 1) im Normalbetriebszustand befindet, so wird von der zentralen Pumpe 3 im Außengerät 1 (d.h. beispielsweise in der Wärmepumpe) Flüssigkeit, im Normalfall Wasser, im geschlossenen Kreislauf zwischen diesem Außengerät 1 und dem Abgabesystem 4 gefördert.

Diese Pumpe 3 kann an sich an jedem beliebigen Ort im System angebracht sein; im gezeigten Beispiel ist sie im Freien im oder beim Außengerät 1, also beim Wärmeerzeuger 2, angeordnet. Wasser bzw. allgemein Flüssigkeit fließt daher von dort, vom Außengerät 1, über die "Rückleitung" 13 zur Frostschutzeinrichtung 10, von dieser weiter zum Abgabesystem 4, wo sie Wärmeenergie abgibt, und dann über die Zuleitung 12 über die Frostschutzeinrichtung 10 wiederum zum Außengerät 1; dabei wird in der Frostschutzeinrichtung 10 einerseits das Rückschlagventil 15, beim Strömen der Flüssigkeit vom Abgabesystem 4 zur Frostschutzeinrichtung 10 hin und durch diese hindurch, und andererseits auch der Filter 16 durchflossen. Der Wärmeerzeuger 2 wird somit optimal vor Verschmutzen geschützt.

Die automatische Fülleinrichtung 14 hält in diesem Normalbetriebszustand den Flüssigkeitskreis in an sich üblicher Weise auf dem eingestellten Betriebsdruck und befindet sich im übrigen im Ruhezustand. Das Ablassventil 17 wird mit Strom versorgt und ist daher geschlossen, ebenso wie die beiden Hähne 23, 24 geschlossen sind. In die Abflüsse 19, 19' fließt keine Flüssigkeit (Wasser) ab.

Bei einem Stromausfall, z.B. im Stromnetz 22, öffnet das Ablassventil 17. Dadurch entsteht ein Druckabfall im System, und die automatische Fülleinrichtung 14 beginnt Flüssigkeit nachzuspeisen, um den Druckabfall auszugleichen. Flüssigkeit bzw. Wasser fließt daher in Pfeilrichtung 29 gemäß Fig. 2 durch den Filter 16 zum Außenbereich 9 und zum dort aufgestellten Außengerät 1 sowie von dort zurück über die Leitung 13 wieder in den Innenbereich 8, zur Frostschutzeinrichtung 10, wobei dort über das Ablassventil 17 weiterhin Flüssigkeit bzw. Wasser austritt, solange der Stromausfall andauert.

Wie erwähnt ist die Drosselung bzw. die Durchflussmenge am Ablassventil 17 bevorzugt derart eingestellt, dass gerade soviel Flüssigkeit bzw. Wasser ausströmt, dass beim Nachfüllen ein Einfrieren im Außenbereich 9 verhindert wird. Bei einer Wassertemperatur von 6°C bis 8°C im Fall einer Kaltwasserversorgung im Bereich des Anschlusses 11 ist, wie sich gezeigt hat, für einen Schutz gegen Einfrieren nur eine geringe Wassermenge erforderlich. Das Rückschlagventil 15 verhindert ein Fließen des nachgefüllten Kaltwassers direkt zum Abgabesystem 4.

Wenn die Stromversorgung (Netzanschluss 22) wieder gegeben ist, schließt das Ablassventil 17, sodass die automatische Fülleinrichtung 14 das System wieder auf den vorgegebenen Betriebsdruck bringt und in den Ruhezustand zurückkehrt.

Durch die eindeutige Fließrichtung (s. Rückschlagventil 15) wird während des beschriebenen Frostschutz-"Spülens" jegliche Luft aus dem System herausgehalten bzw. sogar herausgefördert. Durch den Filter 16 werden sowohl das Außengerät 1 als auch das Abgabesystem 4 vor Schmutz geschützt.

Beim erstmaligen Befüllen der Anlage wird die Fülleinrichtung 14 erstmalig geöffnet. Weiters wird z.B. der Füllhahn 23 geöffnet. Danach füllt sich die Anlage wie folgt mit Flüssigkeit bzw. Wasser: Die Flüssigkeit bzw. Wasser tritt über die automatische Fülleinrichtung 14 in das System ein, wobei ein Fließen wie erwähnt nur in Richtung Austritt zum Außengerät 1 hin möglich ist, da das Rückschlagventil 15 einen Durchfluss in Richtung zum Abgabesystem 4 sperrt. Das Ablassventil 17 ist, da es mit Strom versorgt wird, geschlossen. Der andere Füllhahn 24 kann ebenfalls geschlossen sein.

Die Flüssigkeit bzw. das Wasser gelangt somit zum Außengerät 1 und von dort zurück zum Innenbereich 8, wobei der Innenkreis einschließlich Abgabesystem 4 gefüllt wird, und insbesondere zurück zur Frostschutzeinrichtung 10, in Richtung Rückschlagventil 15. Der Füllhahn 23 wird dabei so lange offen gehalten, bis keine Luft mehr ausströmt. Im Zusammenhang damit ist es daher vorteilhaft, den Füllhahn 23 und das Rückschlagventil 15 möglichst nahe beieinander anzuordnen.

Nach dem Schließen des Füllhahns 23, wenn im System nur mehr Flüssigkeit (Wasser) enthalten ist, füllt die automatische Fülleinrichtung 14 noch so lange Flüssigkeit bzw. Wasser nach, bis der vorgegebene Betriebsdruck erreicht ist. Die Anlage ist dann betriebsfertig.

## Patentansprüche

1. Frostschutzeinrichtung (10) für eine von einem Gebäude-Innenbereich (8) in einen Außenbereich (9) geführte, eine gegen Einfrieren zu schützende Flüssigkeit enthaltende Pumpleitung (3'), wobei die Flüssigkeit bei Frostgefahr in der Leitung (3') zirkuliert wird, **dadurch gekennzeichnet, dass** einerseits ein elektrisch betätigtes, im stromlosen Zustand offenes, zum Anschluss an die Pumpleitung (3') eingerichtetes Ablassventil (17) und andererseits eine stromlos arbeitende, Flüssigkeit unter Druck nachfüllende, automatische, zum Anschluss an die Pumpleitung (3') eingerichtete Fülleinrichtung (14) vorgesehen sind, wobei bei Stromausfall im Betrieb Flüssigkeit aus der Leitung (3') über das dann offene Ablassventil (17) austritt und Flüssigkeit automatisch über die Fülleinrichtung (14) nachgefüllt wird, wodurch Flüssigkeit in der Leitung (3') im Außenbereich zirkuliert wird.

2. Frostschutzeinrichtung (10) nach Anspruch 1, **dadurch gekennzeichnet, dass** die Pumpleitung (3') eine die Flüssigkeit vom Innenbereich in den Außenbereich führende Zuleitung (12) sowie eine die Flüssigkeit aus dem Außenbereich in den Innenbereich zurückführende Rückleitung (13) aufweist, und dass die automatische Fülleinrichtung (14) zum Anschluss an die Zuleitung (12) und das Ablassventil (17) zum Anschluss an die Rückleitung (13) eingerichtet sind.

3. Frostschutzeinrichtung (10) nach Anspruch 1 oder 2, **gekennzeichnet durch** ein Rückschlagventil (15) zur Festlegung der Fließrichtung der in der Pumpleitung (3') zirkulierenden Flüssigkeit.

4. Frostschutzeinrichtung (10) nach einem der Ansprüche 1 bis 3 kennzeichnet einen der Fülleinrichtung (14) nachgeschalteten Filter (16).

5. Frostschutzeinrichtung (10) nach einem der Ansprüche 1 bis 4, **dadurch gekennzeichnet, dass** das Ablassventil (17) einen Elektromotor als Antriebsquelle (17') aufweist.

6. Frostschutzeinrichtung (10) nach einem der Ansprüche 1 bis 5, **dadurch gekennzeichnet, dass** das Ablassventil (17) ein elektrisch betriebener Feder-Kugelhahn ist.

7. Frostschutzeinrichtung (10) nach einem der Ansprüche 1 bis 6, **dadurch gekennzeichnet, dass** das Ablassventil (17) für eine gedrosselte Abgabe von Flüssigkeit im offenen Zustand ausgebildet ist, oder dass in Reihe mit dem Ablassventil (17) eine Drossel (18) angeordnet ist, wobei vorzugsweise das Ablassventil (17) bzw. die Drossel (18) hinsichtlich der Durchflussmenge einstellbar ist.

8. Frostschutzeinrichtung (10) nach Anspruch 7, **dadurch gekennzeichnet, dass** der Drossel (18) eine bei Stromausfall batteriebetriebene, mit einem Temperaturfühler (21) verbundene Reglereinheit (20) zur automatischen Einstellung der Durchflussmenge zugeordnet ist.

9. Frostschutzeinrichtung (10) nach einem der Ansprüche 1 bis 8, **dadurch gekennzeichnet, dass** die Pumpleitung (3') zur Verbindung mit einem Außengerät (1), z.B. einer Wärmepumpe, bevorzugt einer Luft-Wasser-Wärmepumpe, eingerichtet ist.

10. Frostschutzeinrichtung (10) nach einem der Ansprüche 1 bis 9, **dadurch gekennzeichnet, dass** zumindest das Ablassventil (17) und die automatische Fülleinrichtung (14), gegebenenfalls auch der Filter (16) und das Rückschlagventil (15), zu einer integralen Baueinheit (10') zusammengefasst sind, die Verbindungsleitungen (25-28), z.B. mit Gewindeanschlüssen, zur Verbindung mit der Pumpleitung (3') aufweist.
